# EUROPÄISCHE PATENTSCHRIFT

(11) **EP 0 985 810 B1**
(45) Veröffentlichungstag und Bekanntmachung des Hinweises auf die Patenterteilung: **29.10.2003**
(21) Anmeldenummer: 98810903.9
(22) Anmeldetag: 10.09.1998
(51) Int. Cl.: F02C 9/28

(54) **Verfahren zum Minimieren thermoakustischer Schwingungen in Gasturbinenbrennkammern**
Method for minimizing thermo-acoustic oscillations in gas turbine combustion chambers
Procédé pour minimiser les oscillations thermoacoustiques dans la chambre de combustion de turbines à gaz

(43) Veröffentlichungstag der Anmeldung: 15.03.2000
(73) Patentinhaber: ALSTOM (Switzerland) Ltd, 5401 Baden (CH)
(72) Erfinder: Gutmark, Ephraim, Prof., Baton Rouge, LA70810 (US); Paschereit, Christian Oliver, Dr., 5400 Baden (CH); Polifke, Wolfgang, Dr., 85354 Freising (DE); Weisenstein, Wolfgang, 5453, Remetschwil (CH)

(56) Entgegenhaltungen:
- WO-A-93/10401
- US-A- 4 557 106
- US-A- 5 005 353
- US-A- 5 428 951
- US-A- 5 791 889

## Beschreibung

### Technisches Gebiet

Die Erfindung betrifft ein Verfahren zum Minimieren thermoakustischer Schwingungen in Gasturbinenbrennkammern.

### Stand der Technik

Es ist bekannt, daß in Brennkammern von Gasturbinen häufig unerwünschte thermoakustische Schwingungen auftreten. Mit dem Begriff "thermoakustische Schwingungen" werden sich gegenseitig aufschaukelnde thermische und akustische Störungen bezeichnet. Es können dabei hohe Schwingungsamplituden auftreten, die zu unerwünschten Effekten, wie etwa zu einer hohen mechanischen Belastung der Brennkammer, einer erhöhten NOₓ-Emission durch eine inhomogene Verbrennung und sogar zu einem Erlöschen der Flamme führen können. Dies trifft insbesondere für Verbrennungssysteme mit geringer akustischer Dämpfung zu. Um eine hohe Leistung in Bezug auf Pulsationen und Emissionen über einen weiten Betriebsbereich zu garantieren, kann eine aktive Kontrolle der Verbrennungsschwingungen notwendig sein.

Die strömungsmechanische Stabilität eines Gasturbinenbrenners ist von entscheidender Bedeutung für das Auftreten thermoakustischer Schwingungen. Die im Brenner entstehenden strömungsmechanischen Instabilitätswellen führen zur Ausbildung von Wirbeln. Diese auch als kohärente Strukturen bezeichneten Wirbel spielen eine bedeutende Rolle bei Mischungsvorgängen zwischen Luft und Brennstoff. Die Dynamik der kohärenten Strukturen beeinflußt die Verbrennung und die damit verbundene Wärmefreisetzung. Die Wirbel können daher zu einer periodischen Wärmefreisetzung der Flamme des Brenners und damit zu Druckschwankungen führen. Insbesondere wenn über die gesamte Fläche des Brenners keine homogene Vermischung von Brennstoff und Luft gegeben ist, wirkt sich die Entstehung von kohärenten Wirbelstrukturen stark auf die Ausbildung von thermoakustischen Instabilitäten aus. Somit liegt eine weitere Möglichkeit zur Reduzierung der Schwingungsneigung eines Brenners in der Stabilisierung der Flamme des Vormischbrenners.

US5791889 hat ein Verfahren und eine Vorrichtung zur Kontrolle von Verbrennungsschwankungen in Brennkammern zum Gegenstand. Mittels einer pulsierenden Pilotflamme wird die oszillierende Flammenfront in der Brennkammer positioniert und geformt. Zu diesem Zweck ist in die Pilotbrennstoffleitung ein schnelles Ventil integriert.

Zur aktiven Kontrolle der Stabilität eines Verbrennungssystems regt US 5428951 an, durch periodische Wärmefreisetzung Druckstösse zu erzeugen, die über die Verbrennungsluftzufuhr in die Brennkammer eingeleitet werden. Dort erfolgt eine Anfachung von Strömungsinstabilitäten zu einer Phase, die für die Ausbildung verbrennungsgetriebener Instabilitäten ungünstig ist.

Zur aktiven Kontrolle von Bewegungsinstabilitäten in Gasturbinenmotoren, beispielsweise herrührend aus Instabilitäten der Verbrennungsluftzufuhr, schlägt US 5005353 vor, diese Instabilitäten zu detektieren und danach die Brennstoffzufuhr zu variieren.

Nach US 4557106 werden in Abhängigkeit von Faktoren der instabilen Verbrennung Druckschwankungen in der Brennstoffzufuhr induziert.

WO 9310401 offenbart eine Vorrichtung zur Unterdrückung von Verbrennungsschwingungen in einer zu akustischen Schwingungen neigenden Brennkammer einer Gasturbinenanlage durch Ankopplung eines akustisch wirksamen Elements an die Brennstoffleitung und akustischer Modulation des Brennstoffs.

### Darstellung der Erfindung

Der Erfindung liegt die Aufgabe zugrunde, ein Verfahren zum Minimieren der Druckamplitude thermoakustischer Schwingungen in Gasturbinenbrennkammern zu schaffen.
Diese Aufgabe wird erfindungsgemäß durch das Verfahren zum Minimieren der Druckamplitude thermoakustischer Schwingungen in einer Gasturbine gemäss dem unabhängigen Patentanspruch gelöst.

Die Menge an Brennstoff, die in großräumigen Wirbeln umgesetzt wird, kann durch kontrollierte Modulation des Brennstoffstroms der Vormischung eines Vormischbrenners beeinflußt werden. Erfindungsgemäß wird der flüssige oder gasförmige Brennstoff in den Vormischbrenner mit Hilfe von zwei Brennstoffleitungen (13,14) zugeführt, und die Modulation der Menge an zugeführtem Brennstoff erfolgt durch jeweils ein Brennstoffventil pro Brennstoffleitung.
Unter modulierter Eindüsung wird erfindungsgemäß jede zeitlich variierende Eindüsung von Brennstoff verstanden. Die Modulation kann erfindungsgemäß mit einer beliebigen Frequenz erfolgen. Bevorzugt erfolgt die Eindüsung mit einer Frequenz zwischen 0.3 Hz und 5 kHz, wobei der Bereich von 5 Hz bis 200 Hz besonders bevorzugt wird. Die Eindüsung erfolgt hierbei phasenunabhängig von den Druckschwingungen in dem Verbrennungssystem.

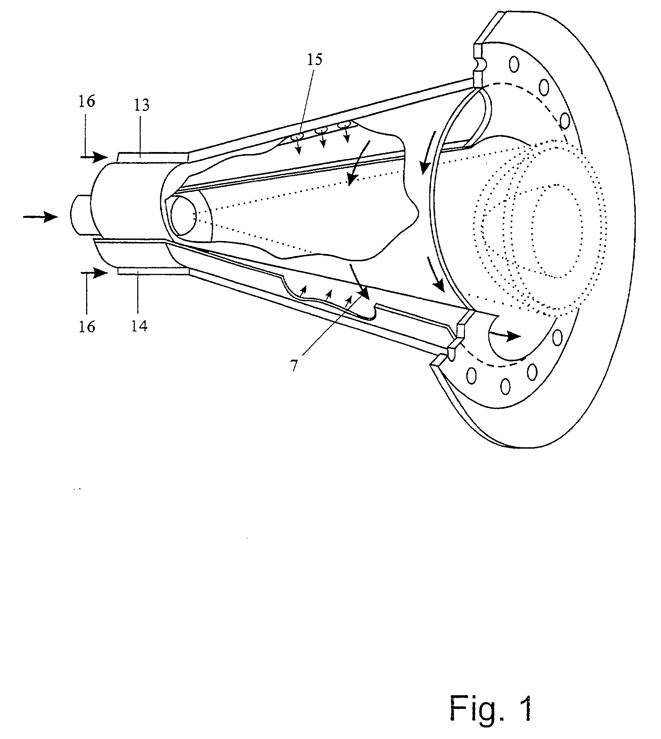

Figur 1 zeigt einen Vormischbrenner, bei dem das erfindungsgemäße Verfahren zum Minimieren der Druckamplitude thermoakustischer Schwingungen eingesetzt werden kann. Der Brenner weist zwei Brennstoffleitungen 13, 14 auf, die mit Öffnungen 15 versehen sind, durch welche der gasförmige oder flüssige Brennstoff 16 der Verbrennungsluft 7 zugemischt wird.

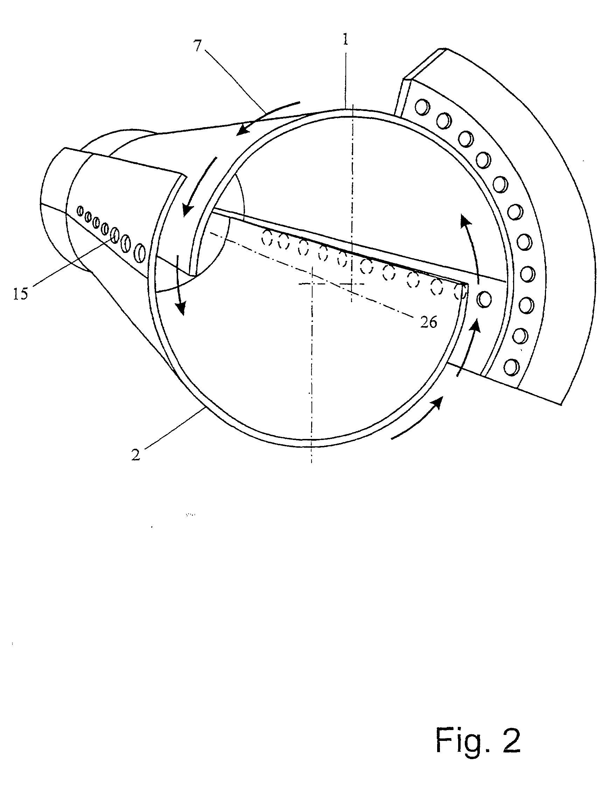

Die genaue Lage der Öffnungen 15, durch die der Brennstoff 16 der Verbrennungsluft 7 zugemischt wird, ist deutlicher aus Figur 2 zu ersehen. Die Brennstoffleitungen 13, 14 sind an den Teilkörpern 1, 2 angebracht, so daß die Öffnungen 15 entlang zweier Geraden aufgereiht sind, die parallel und im gleichen Abstand von der Hauptmittelachse 26 (= Brennerachse) des Vormischbrenners verlaufen. Sämtliche Öffnungen 15 liegen in einer Ebene, der Brennstoffinjektionsebene.

Erfindungsgemäß erfolgt die Eindüsung von Brennstoff durch die Öffnungen 15 nicht zeitlich konstant, sondern moduliert. Es wird also die Menge an Brennstoff, die durch die Brennstoffleitungen 13, 14 zugeführt wird, variiert.

Die Brennstoffleitungen 13, 14 erstrecken sich aus einer Beruhigungskammer (nicht gezeigt), welche von einer einzelnen Brennstoffleitung (nicht gezeigt) versorgt wird, in Richtung der Teilkörper 1, 2.

Die durch jeweils eine Brennstoffleitung 13, 14 zugeführte Menge an Brennstoff wird mit Hilfe von je einem Brennstoffventil variiert. Der oben beschriebene Brenner muß dazu technisch abgewandelt werden. Dies erfolgt entweder durch ein Hindurchführen der Brennstoffleitungen 13, 14 durch die Beruhigungskammer, wodurch eine getrennte Versorgung der beiden Leitungen mit Brennstoff ermöglicht wird, oder durch das Anbringen von jeweils einer separaten Beruhigungskammer für jede der Brennstoffleitungen 13, 14. Diese separaten Beruhigungskammern werden dann getrennt mit Brennstoff versorgt. In beiden Fällen wird die Menge an Brennstoff, die durch die Brennstoffleitungen 13, 14 dem Vormischbrenner zugeführt wird, mit Hilfe von je einem Brennstoffventil variiert. Die Modulation der durch die Brennstoffleitung 13 zugeführten Menge an Brennstoff erfolgt somit unabhängig von der Modulation der durch die Brennstoffleitung 14 zugeführten Brennstoffmenge. Zwischen den beiden modulierten Brennstoffströmen kann also eine beliebige Phasenverschiebung vorliegen. Im Extremfall erfolgt die Modulation der Brennstoffströme um 180° phasenverschoben (antisymmetrisch), d.h. bei maximaler Eindüsung durch eine Brennstoffleitung erfolgt eine minimale Eindüsung durch die andere Brennstoffleitung.

Somit kann erfindungsgemäß jede beliebige Phasenverschiebung ϕ zwischen den beiden Brennstoffströmen verwendet werden. Gemäß einer bevorzugten Ausführungsform erfolgt die Modulation in beiden Brennstoffleitungen gleichförmig (ϕ = 0°). Gemäß einer weiteren, besonders bevorzugten Ausführungsform erfolgt die Modulation der Brennstoffströme um 180° phasenverschoben, d.h. bei maximaler Eindüsung durch eine Brennstoffleitung erfolgt eine minimale Eindüsung durch die andere Brennstoffleitung.

Für den Fall ϕ = 180° wird besonders wirkungsvoll die Axialsymmetrie der Flamme des Vormischbrenners gestört. Bekanntermaßen sind im Fall niederfrequenter thermoakustischer Druckschwingungen hoher Amplitude großräumige axialsymmetrische Wirbelstrukturen für die periodische Wärmefreisetzung verantwortlich. Die Wirkung solcher Strukturen auf die Verbrennung läßt sich am effektivsten beeinflussen, indem die Axialsymmetrie der Flamme gestört wird, was gemäß der vorliegenden Erfindung durch die phasenverschobene Modulation der beiden Vormischbrennstoffströme erreicht wird. Besonders vorteilhafte Effekte ergeben sich für eine Phasenverschiebung von 180°.

Alternativ kann die Eindüsung im Rahmen der vorliegenden Erfindung gemäß einer besonders bevorzugten Ausführungsform so erfolgen, daß sie mit den Druckschwingungen in einer festen Phasenbeziehung steht. In diesem Fall wird die Phase der Druckschwingungen beispielsweise über ein Mikrophon in der Brennkammer bestimmt und diese Phaseninformation zur Steuerung der Eindüsung verwendet.

Bevorzugt wird die momentane Eindüsung des Brennstoffs mit einem in dem Verbrennungssystem gemessenen Signal phasengekoppelt. Dabei wird in dem Verbrennungssystem ein Signal gemessen, das mit den thermoakustischen Schwingungen korreliert ist. Dieses Signal kann stromab des Brenners in der Brennkammer oder einer stromauf des Brenners angeordneten Beruhigungskammer gemessen werden. Es sind dann bevorzugt Mittel vorgesehen, die die momentane Eindüsung des Brennstoffs als Funktion des Meßsignal steuern.

Durch die Wahl einer geeigneten, je nach Art des gemessenen Signals verschiedenen Phasendifferenz zwischen Meßsignal und momentaner Eindüsung wirkt die modulierte Eindüsung des Brennstoffs in besonders geeigneter Weise der Ausbildung kohärenter Strukturen entgegen, so daß die Amplitude der Druckpulsation verringert wird.

Vorteilhaft wird in dem Verbrennungssystem ein Drucksignal gemessen, das die mit den thermoakustischen Schwingungen verbundenen Druckschwankungen anzeigt. Dies kann etwa mit einem oder mehreren in der Brennkammer, der Beruhigungskammer oder an einer Wand einer der Kammern angeordneten Mikrophonen geschehen.

Eine andere Möglichkeit besteht im Messen eines optischen Signals, das mit den Wärmefreisetzungsschwankungen des Verbrennungsprozesses korreliert ist. Vorteilhaft wird dabei eine Chemolumineszenz-Emission gemessen, bevorzugt von einem der Radikale OH oder CH. Ein optisches Signal wird mit einem Sensor für sichtbare oder infrarote Strahlung aufgenommen, bevorzugt einer optischen Fasersonde.

Vorteilhaft wird das in dem Verbrennungssystem gemessene Signal gefiltert, phasengedreht und verstärkt, und das so gewonnene Signal als Eingangssignal für die Steuerung der momentanen Eindüsung von flüssigem oder gasförmigen Brennstoff benutzt. Falls notwendig, wird das Signal zusätzlich vor der Filterung verstärkt. Die Filterung unterdrückt ein störendes Rauschsignal und besteht vorzugsweise aus einem Bandpassfilter. Die Phasendrehung berücksichtigt, daß in der Regel durch die Anordnung der Meßsensoren, durch die Meßgeräte und die Leitungen selbst Phasenverschiebungen auftreten. Wird die relative Phase so gewählt, daß sich eine möglichst große Reduzierung der Druckamplituden ergibt, werden alle diese phasendrehenden Effekte implizit berücksichtigt. Der Wert der Phasendrehung kann, nach Bestimmung eines günstigen Wertes, fixiert bleiben. Da sich die günstigste relative Phase aber mit den Betriebsbedingungen ändern kann, bleibt die relative Phase vorteilhaft variabel und wird etwa über eine Kontrolle der Druckschwankungen so nachgeführt, daß stets eine große Unterdrückung gewährleistetet ist.

Diese phasengekoppelte Modulation des Vormischbrennstoffstroms erfolgt, wie oben für die phasenunabhängige Modulation beschrieben, durch Öffnen und Schließen von zwei Brennstoffventilen, wodurch die Menge an Brennstoff, die durch die Brennstoffleitungen 13, 14 zugeführt wird, variiert werden kann. Auch bei der phasengekoppelten Modulation erfolgt bei Verwendung von zwei Brennstoffventilen die Variation der durch die eine Brennstoffleitung zugeführten Menge an Brennstoff erfindungsgemäß unabhängig von der Modulation der durch die zweite Brennstoffleitung zugeführten Brennstoffmenge.

Somit kann erfindungsgemäß wiederum jede beliebige Phasenverschiebung ϕ zwischen den beiden Brennstoffströmen vorliegen. Gemäß einer bevorzugten Ausführungsform erfolgt die Modulation in beiden Brennstoffleitungen gleichförmig (ϕ = 0°). Gemäß einer weiteren, besonders bevorzugten Ausführungsform erfolgt die Modulation der Brennstoffströme um 180° phasenverschoben, also erfolgt beispielsweise bei maximaler Eindüsung durch die Brennstoffleitung 13 eine minimale Eindüsung durch die Brennstoffleitung 14.

Für den Fall ϕ = 180° zeigen sich die oben für die phasenunabhängige Modulation beschriebenen besonders vorteilhaften Effekte.

Zur Modulation des eingedüsten Brennstoffs werden bevorzugt Brennstoffventile verwendet, die auf Steuerungssignale mit einer schnellen Änderung der Menge an eingedüstem Brennstoff reagieren (schnelle Brennstoffventile).

Die Menge des pro Zeiteinheit eingedüsten Brennstoffs kann im Rahmen der vorliegenden Erfindung in weiten Bereichen variiert werden. Wie oben bereits beschrieben, erfolgt erfindungsgemäß eine Modulation der in den Vormischbrenner eingedüsten Menge an Brennstoff. Gemäß einer bevorzugten Ausführungsform erfolgt dabei neben der Eindüsung einer konstanten Menge an Brennstoff in den Vormischbrenner die Eindüsung einer zusätzlichen, modulierten Menge an Brennstoff in Form eines zeitlich begrenzten Pulses, wobei dann anschließend für eine bestimmte Zeit kein zusätzlicher Brennstoff eingedüst wird. Dieses Vorgehen ist notwendig, da bei einer pulsartigen Variation des gesamten Brennstoffstroms zu bestimmten Zeiten überhaupt kein Brennstoff eingedüst würde. Dies würde aber zu einem Abmagern und Verlöschen der Flamme des Brenners führen. Daher erfolgt gleichzeitig die Eindüsung einer konstanten Menge an Brennstoff und die Eindüsung zeitlich begrenzter Pulse einer zusätzlichen Menge an Brennstoff.

Bezeichnet man den Zeitraum der zusätzlichen Brennstoffeindüsung mit t_{Zugabe} und den Zeitraum ohne zusätzliche Brennstoffeindüsung mit t₀, so ergibt sich die Periodendauer der Modulation der Brennstoffeindüsung zu τ = t_{Zugabe} + t₀ und die Frequenz zu ν = 1/τ = 1/(t_{Zugabe} + t₀). Im Rahmen der vorliegenden Erfindung wird mit dem Begriff "duty cycle" das Verhältnis von t_{Zugabe} zu τ in Prozent ausgedrückt. Bei einem duty cycle von 50% ist somit der Zeitraum der zusätzlichen Brennstoffeindüsung gleich dem Zeitraum, in dem kein zusätzlicher Brennstoff eingedüst wird. Die Zugabe einer konstanten Menge an Brennstoff, also keiner zusätzlichen Eindüsung, entspricht einem duty cycle von 100%.

Die Eindüsung von Brennstoff in den Vormischbrenner erfolgt erfindungsgemäß mit einem duty cycle kleiner 100%. Bevorzugt wird der Bereich 1% ≤ duty cycle ≤ 50%.

### Kurze Beschreibung der Zeichnungen

Die Erfindung soll nachfolgend anhand eines Ausführungsbeispiels im Zusammenhang mit den Zeichnungen näher erläutert werden. Es zeigen
- Fig. 1: einen Brenner in perspektivischer Darstellung entsprechend aufgeschnitten;
- Fig. 2: den Vormischbrenner gemäß Figur 1, jedoch aus einer anderen Perspektive und in vereinfachter Darstellung;
- Fig. 3: ein Flußdiagramm einer Ausführungsform des erfindungsgemäßen Verfahrens zur phasengekoppelten modulierten Eindüsung von Brennstoff;
- Fig. 4: eine Auftragung der relativen Druckschwankung bei phasengekoppelter modulierter Eindüsung von Brennstoff (ϕ = 0°) bezogen auf die Druckschwankung bei Eindüsung einer konstanten Brennstoffmenge (100 %) als Funktion der relativen Phase zwischen Meßsignal und momentaner Eindüsung;
- Fig. 5: eine Auftragung der relativen Druckschwankung bei phasengekoppelter modulierter Eindüsung von Brennstoff (ϕ = 180°) bezogen auf die Druckschwankung bei Eindüsung einer konstanten Brennstoffmenge (100 %) als Funktion der relativen Phase zwischen Meßsignal und momentaner Eindüsung.

### Wege zur Ausführung der Erfindung

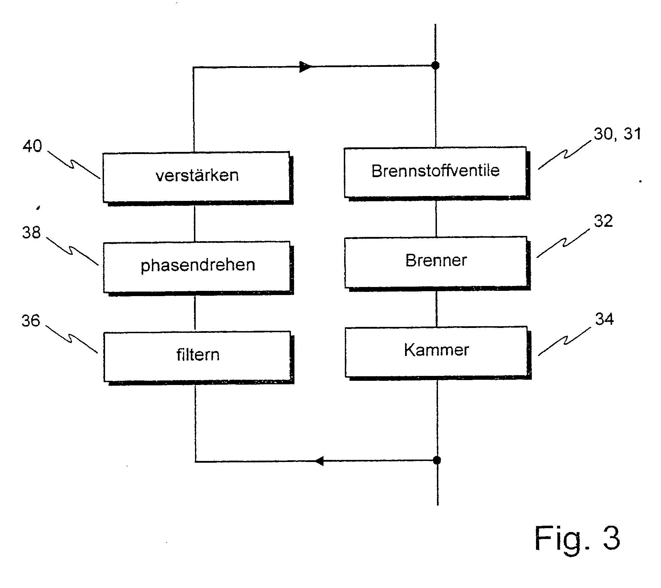

Gemäß den oben beschriebenen allgemeinsten Ausführungsformen der vorliegenden Erfindung erfolgt die Eindüsung des Brennstoffs phasenunabhängig von den Druckschwingungen in dem Verbrennungssystem. Alternativ kann die Eindüsung gemäß einer besonders bevorzugten Ausführungsform so erfolgen, daß sie mit den Druckschwingungen in einer festen Phasenbeziehung steht. Diese phasengekoppelte modulierte Eindüsung von Brennstoff wird anhand eines Flußdiagramms (Figur 3) erläutert. Zur Ansteuerung der Brennstoffventile 30, 31 wird eine geschlossene Kontrollschleife verwendet. Das in der Brennkammer gemessene Druck- oder Lumineszenzsignal wird zur Rauschunterdrückung gefiltert (Bezugszeichen 36), phasengedreht (Bezugszeichen 38), verstärkt (Bezugszeichen 40) und zur Steuerung der Brennstoffventile 30, 31 verwendet. Der mit Hilfe der Brennstoffventile 30, 31 modulierte Brennstoff wird in den Brenner 32 eingedüst, an den sich die Kammer 34 anschließt, die hier die Brennkammer umfaßt. In einer der Kammern des Verbrennungssystems (Beruhigungskammer oder Brennkammer) findet die Messung des oben erwähnten Druck- oder Lumineszenzsignals statt, wodurch die Kontrollschleife geschlossen wird.

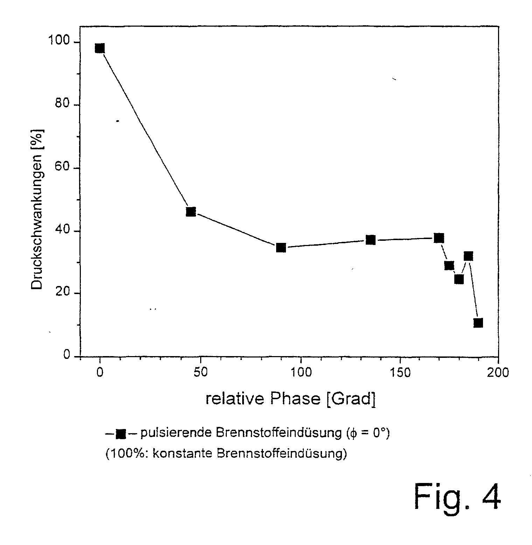

Figur 4 zeigt die Ergebnisse einer experimentellen Bestimmung der Druckschwankungen in einem Ausführungsbeispiel, bei dem das Verbrennungssystem bei einer Frequenz von rund 100 Hz zu axialsymmetrischen thermoakustischen Schwingungen neigte. In Figur 4 sind die Druckschwankungen bei phasengekoppelter modulierter Eindüsung von Brennstoff bezogen auf die Druckschwankungen bei Eindüsung einer konstanten Brennstoffmenge (100 %) gezeigt. Die Eindüsung des Brennstoffs erfolgte durch schnelle Brennstoffventile der Firma MOOG.

In dem vorliegenden Beispiel wurden mit einem B&K wassergekühlten Mikrophon die akustischen Resonanzen der Kammer aufgenommen. Die Signale wurden vorverstärkt, bandpassgefiltert und phasengedreht. Die Phasendrehung wurde dabei systematisch zwischen 0° und 190° variiert. Das resultierende Signal bildete den Trigger für einen Signalgenerator, der die Brennstoffventile über eine Verstärkerstufe ansteuerte. Die Modulation der beiden Brennstoffströme erfolgte ohne Phasenverschiebung zueinander (ϕ = 0°). Figur 4 zeigt, daß die Druckamplituden bei geeignet gewählter Phasendrehung um bis zu 87 Prozentpunkte reduziert werden.

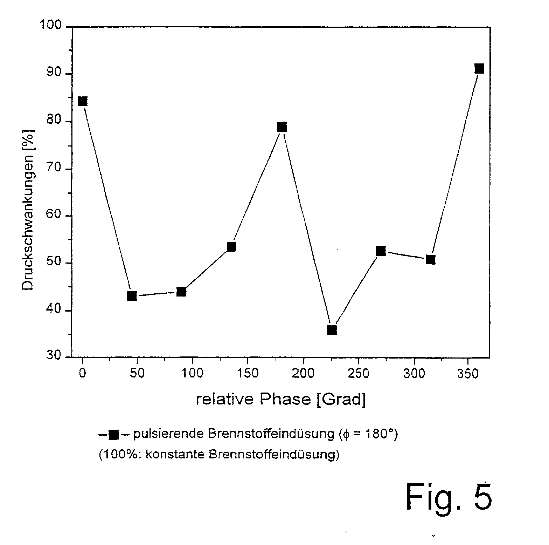

Figur 5 zeigt die Ergebnisse einer experimentellen Bestimmung der Druckschwankungen in einem Ausführungsbeispiel, bei dem das Verbrennungssystem bei einer Frequenz von rund 100 Hz zu axialsymmetrischen thermoakustischen Schwingungen neigte. In Figur 5 sind die Druckschwankungen bei phasengekoppelter modulierter Eindüsung von Brennstoff bezogen auf die Druckschwankungen bei Eindüsung einer konstanten Brennstoffmenge (100 %) gezeigt. Die Eindüsung des Brennstoffs erfolgte durch schnelle Brennstoffventile der Firma MOOG.

In dem vorliegenden Beispiel wurden mit einem B&K wassergekühlten Mikrophon die akustischen Resonanzen der Kammer aufgenommen. Die Signale wurden vorverstärkt, bandpassgefiltert und phasengedreht. Die Phasendrehung wurde dabei systematisch zwischen 0° und 360° variiert. Das resultierende Signal bildete den Trigger für einen Signalgenerator, der die Brennstoffventile über eine Verstärkerstufe ansteuerte. Die Signale an die beiden Brennstoffventile wurden zusätzlich in jedem Fall um 180° relativ zueinander phasenverschoben, wodurch die Modulation der beiden Brennstoffströme mit einer Phasenverschiebung von 180° (ϕ = 180°) erfolgte. Figur 5 zeigt, daß die Druckamplituden bei geeignet gewählter relativer Phase um bis zu 55 Prozentpunkte reduziert werden.

### Bezugszeichenliste

- 1, 2: Teilkörper
- 7: Verbrennungsluft
- 13, 14: Brennstoffleitungen
- 15: Öffnungen
- 16: Brennstoff
- 26: Hauptmittelachse
- 30, 31: Brennstoffventile
- 32: Brenner
- 34: Kammer
- 36: Filtern
- 38: Phasendrehen
- 40: Verstärken

## Patentansprüche

1. Verfahren zum Minimieren der Druckamplitude thermoakustischer Schwingungen in einem Verbrennungssystem durch modulierte Eindüsung von flüssigem oder gasförmigem Vormischbrennstoff, **dadurch gekennzeichnet, daß** der Vormischbrennstoff *einem Brenner* mit Hilfe von zwei Brennstoffleitungen (13,14) zugeführt wird und die Modulation der Menge an zugeführtem Brennstoff durch jeweils ein Brennstoffventil pro Brennstoffleitung erfolgt.

2. Verfahren nach Anspruch 1, wobei die Modulation dadurch erfolgt, daß neben einer konstanten Menge an Vormischbrennstoff zusätzlich Brennstoff in Form eines zeitlich begrenzten Pulses eingedüst wird, wobei eine vollständige Modulationsperiode aus der Eindüsung des zeitlich begrenzten Pulses und aus der nachfolgend fehlenden Zugabe von zusätzlichem Brennstoff besteht.

3. Verfahren nach Anspruch 1, wobei die Frequenz der Modulation zwischen 0,3 Hz und 5 kHz liegt.

4. Verfahren nach Anspruch 3, wobei die Frequenz der Modulation zwischen 5 Hz und 200 Hz liegt.

5. Verfahren nach Anspruch 1, wobei der duty cycle weniger als 100% beträgt.

6. Verfahren nach Anspruch 5, wobei der duty cycle die Bedingung 1% ≤ duty cycle ≤ 50% erfüllt.

7. Verfahren nach Anspruch 1, wobei die momentane Eindüsung von flüssigem oder gasförmigen Vormischbrennstoff mit einem in dem Verbrennungssystem gemessenen Signal phasengekoppelt wird.

8. Verfahren nach Anspruch 7, bei dem das in dem Verbrennungssystem gemessene Signal gefiltert, phasengedreht und verstärkt wird, und das so gewonnene Signal die *Brennstoffventile* steuert, die die momentane Eindüsung von flüssigem oder gasförmigem Vormischbrennstoff regeln.

9. Verfahren nach Anspruch 7 oder 8, bei dem das in dem Verbrennungssystem gemessene Signal ein Drucksignal oder ein Chemolumineszenzsignal ist.

10. Verfahren nach Anspruch 9, bei dem das in dem Verbrennungssystem gemessene Signal ein Chemolumineszenzsignal von der Emission eines der Radikale OH oder CH ist.

11. Verfahren nach einem der Ansprüche 7 bis 10, bei dem das in dem Verbrennungssystem gemessene Signal in der Brennkammer oder in einer Beruhigungskammer gemessen wird.

12. Verfahren nach Anspruch 1, wobei die Modulation der zugeführten Menge an Vormischbrennstoff in den beiden Brennstoffleitungen (13, 14) mit einer beliebigen relativen Phasenverschiebung ϕ erfolgt.

13. Verfahren nach Anspruch 12, wobei die Modulation der zugeführten Menge an Vormischbrennstoff in den beiden Brennstoffleitungen mit einer Phasenverschiebung ϕ = 0° oder mit einer Phasenverschiebung ϕ = 180° erfolgt.

## Claims

1. Method of minimizing the pressure amplitude of thermoacoustic vibrations in a combustion system by modulated spraying of liquid or gaseous premix fuel, **characterized in that** the premix fuel is fed to a burner by means of two fuel lines (13, 14), and the modulation of the quantity of fed fuel is effected in each case by one fuel valve per fuel line.

2. Method according to Claim 1, the modulation being effected owing to the fact that, in addition to a constant quantity of premix fuel, fuel is additionally sprayed in the form of a pulse limited with respect to time, a complete modulation period consisting of the spraying of the pulse limited with respect to time and the subsequently absent addition of additional fuel.

3. Method according to Claim 1, the frequency of the modulation being between 0.3 Hz and 5 kHz.

4. Method according to Claim 3, the frequency of the modulation being between 5 Hz and 200 Hz.

5. Method according to Claim 1, the duty cycle being less than 100%.

6. Method according to Claim 5, the duty cycle fulfilling the condition 1% ≤ duty cycle ≤ 50%.

7. Method according to Claim 1, the instantaneous spraying of liquid or gaseous premix fuel being phase-coupled with a signal measured in the combustion system.

8. Method according to Claim 7, in which the signal measured in the combustion system is filtered, phase-shifted and amplified, and the signal which is thus obtained controls the fuel valves, which regulate the instantaneous spraying of liquid or gaseous premix fuel.

9. Method according to Claim 7 or 8, in which the signal measured in the combustion system is a pressure signal or a chemiluminescence signal.

10. Method according to Claim 9, in which the signal measured in the combustion system is a chemiluminescence signal from the emission of one of the radicals OH or CH.

11. Method according to one of Claims 7 to 10, in which the signal measured in the combustion system is measured in the combustion chamber or in a steadying chamber.

12. Method according to Claim 1, the modulation of the fed quantity of premix fuel in the two fuel lines (13, 14) being effected with any relative phase displacement ϕ.

13. Method according to Claim 12, the modulation of the fed quantity of premix fuel in the two fuel lines being effected with a phase displacement ϕ = 0° or with a phase displacement ϕ = 180°.

## Revendications

1. Procédé pour minimiser l'amplitude de pression d'oscillations thermoacoustiques dans un système de combustion par injection modulée de combustible de prémélange sous forme liquide ou gazeuse, **caractérisé en ce que** le combustible de prémélange est acheminé à *un brûleur* à l'aide de deux conduites de combustible (13, 14) et la modulation de la quantité de combustible acheminée s'effectue à chaque fois par une soupape de combustible dans chaque conduite de combustible.

2. Procédé selon la revendication 1, dans lequel la modulation s'effectue par le fait qu'en plus d'une quantité constante de combustible de prémélange, on injecte du combustible supplémentaire sous forme d'une impulsion limitée dans le temps, une période de modulation complète se composant de l'injection de l'impulsion limitée dans le temps et de l'absence suivante d'ajout de combustible supplémentaire.

3. Procédé selon la revendication 1, dans lequel la fréquence de la modulation est comprise entre 0,3 Hz et 5 kHz.

4. Procédé selon la revendication 3, dans lequel la fréquence de la modulation est comprise entre 5 Hz et 200 Hz.

5. Procédé selon la revendication 1, dans lequel le rapport cyclique est inférieur à 100%.

6. Procédé selon la revendication 5, dans lequel le rapport cyclique satisfait à la condition 1% ≤ rapport cyclique ≤ 50%.

7. Procédé selon la revendication 1, dans lequel l'injection temporaire de combustible de prémélange liquide ou gazeux est couplée en phase avec un signal mesuré dans le système de combustion.

8. Procédé selon la revendication 7, dans lequel le signal mesuré dans le système de combustion est filtré, soumis à une rotation de phase et amplifié, et le signal ainsi obtenu commande les *soupapes de combustible* qui régulent l'injection temporaire de combustible de prémélange liquide ou gazeux.

9. Procédé selon la revendication 7 ou 8, dans lequel le signal mesuré dans le système de combustion est un signal de pression ou un signal de chimiluminescence.

10. Procédé selon la revendication 9, dans lequel le signal mesuré dans le système de combustion est un signal de chimiluminescence de l'émission des radicaux OH ou CH.

11. Procédé selon l'une quelconque des revendications 7 à 10, dans lequel le signal mesuré dans le système de combustion est mesuré dans la chambre de combustion ou dans une chambre de stabilisation.

12. Procédé selon la revendication 1, dans lequel la modulation de la quantité de combustible de prémélange apportée dans les deux conduites de combustible (13, 14) s'effectue avec un décalage de phase ϕ relatif quelconque.

13. Procédé selon la revendication 12, dans lequel la modulation de la quantité de combustible de prémélange apportée dans les deux conduites de combustible s'effectue avec un décalage de phase ϕ = 0° ou avec un décalage de phase ϕ = 180°.
